# EUROPEAN PATENT APPLICATION

(11) **EP 2 017 948 A2**
(43) Date of publication of application: **21.01.2009**
(21) Application number: 08012723.6
(22) Date of filing: 15.07.2008
(51) Int. Cl.: H02M 7/48

(54) **Method and apparatus for converting a direct current to alternating current utilizing a plurality of inverters**

(30) Priority: 16.07.2007 US 879054
(71) Applicant: Enphase Energy, Inc., Petaluma CA 94952 (US)
(72) Inventor: Fornage, Martin, Petaluma California 94952 (US)
(74) Representative: Jackson, Derek Charles

(57) **Abstract**

An apparatus for converting Direct Current (DC) to Alternating Current (AC), comprising a plurality of inverters, each inverter having a separate DC input adapted to be coupled to at least one solar cell defining an area of a solar panel.

## Description

### BACKGROUND OF THE INVENTION

### Field of the invention

The present invention relates generally to a method and apparatus for converting a direct current (DC) to alternating current,(AC). More particularly, the present invention relates to a method and apparatus for converting DC to AC utilizing a plurality of inverters.

### Description of the Related Art

Historically, photovoltaic panels have been used mostly in remote applications where commercial power was not available. This was due to the high cost of an installation making photovoltaic panels an economical choice only when nothing else was available. However, photovoltaic panels are now well established that the fossil energy reserves, which are currently used to generate electricity, are being rapidly depleted. The worldwide growth of power demand is leading to a durable increase in energy cost.

Photovoltaic generation systems require an inverter that converts Direct Current (DC) from solar cells to Alternating Current (AC) for use by household appliances, for example. It is important for any power generation system to produce and deliver electricity to electric appliances in the most efficient manner. A typical photovoltaic array comprises a plurality of sub-arrays, where each sub-array comprises a plurality of individual photovoltaic panels. A junction box combines the output of the various sub-arrays to form a DC signal that is supplied to an inverter. The inverter converts the DC to AC and supplies the AC to the power grid. The user uses power from the grid in a typical fashion; however, their cost of electricity from the grid is offset by the amount of electricity the photovoltaic generation system supplies to the grid.

In such a system, the amount of power that is efficiently coupled to the grid is important for the cost recovery of the system. As such, the inverter must be as efficient as possible. In a typical large-scale installation, rows of panels are installed on a flat surface with the panels tilted at an angle depending on local conditions such as latitude. Typically, for a location in the Northern Hemisphere, the more tilt, the more efficient will be the collection in winter, while a smaller tilt will harvest more power in summer, when the sun is higher in the sky. Some installations have variable tilts, thus, panels are always perpendicular to the sun's rays in order to harvest the maximum amount of energy. To enable the sun to fully illuminate all the panels, the panels are widely spaced from one another to avoid one panel shadowing another when the sun is low on the horizon. Although spacing the panels in such a manner maximizes the panel illumination for a given area, such spacing causes the solar array to occupy an excessive amount of space to produce a required amount of power. Consequently, solar energy systems are impractical in densely populated areas or in areas of high real estate prices.

More specifically, the current produced by the solar cell array is proportional to the incident solar energy. The cell should be biased at the Maximum Power Point (MPP) in order to extract the maximum power, This MPP changes based on temperature, incident light level and aging and cannot be predicted, but inferred. Due to manufacturing tolerances, all solar cells have slightly different characteristics that vary the MPP from cell to cell. As such, when the solar cells of an array are connected in series, the average MPP will be used for biasing the entire array, i.e., a "global" bias point. The "global" bias point is typically demonstrably less than the MPP of all the individual cells of the array. Additionally, if a row of cells is shaded, it cannot generate the current level that the other cells may generate in full sun. Any panel shading entails a very significant power production loss. In many cases, half a shaded panel produces no power at all. Thus, for an array that is partially shaded, the global MPP is substantially different than the MPP for either the shaded portion or full sun portion. Consequently, the individual cells are not biased optimally for peak power generation. In order to avoid shading of the panels on one another, as mentioned above, the panel rows are positioned a sufficient distance apart to minimize shadowing.

Therefore, there is a need for a method and apparatus for efficiently converting DC to AC for a solar array.

### SUMMARY OF THE INVENTION

In one embodiment, the present invention discloses an apparatus for converting Direct Current (DC) to Alternating Current (AC), comprising a plurality of inverters, each inverter having a separate DC input adapted to be coupled to at least one solar cell defining an area of a solar panel

### BRIEF DESCRIPTION OF THE DRAWINGS

So that the manner in which the above recited features of the present invention can be understood in detail, a more particular description of the invention, briefly summarized above, may be had by reference to embodiments, some of which are illustrated in the appended drawings. It is to be noted, however, that the appended drawings illustrate only typical embodiments of this invention and are therefore not to be considered limiting of its scope, for the invention may admit to other equally effective embodiments.

Fig. 1 is a side view of an exemplary embodiment of the photovoltaic panel system;

Fig. 2 is a front view of an exemplary embodiment of a photovoltaic panel of the photovoltaic panel system of Fig. 1;

Fig. 3 is a block diagram of an exemplary embodiment of a photovoltaic panel system in accordance with the present invention;

Fig. 4 is a detailed block diagram of an exemplary embodiment of an inverter system of Fig. 3 in accordance with the present invention;

Fig. 5 is a block diagram of an exemplary embodiment of a dual stage inverter in accordance with the present invention; and

Fig. 6 is a block diagram of an exemplary embodiment of a single stage inverter in accordance with the present invention.

### DETAILED DESCRIPTION

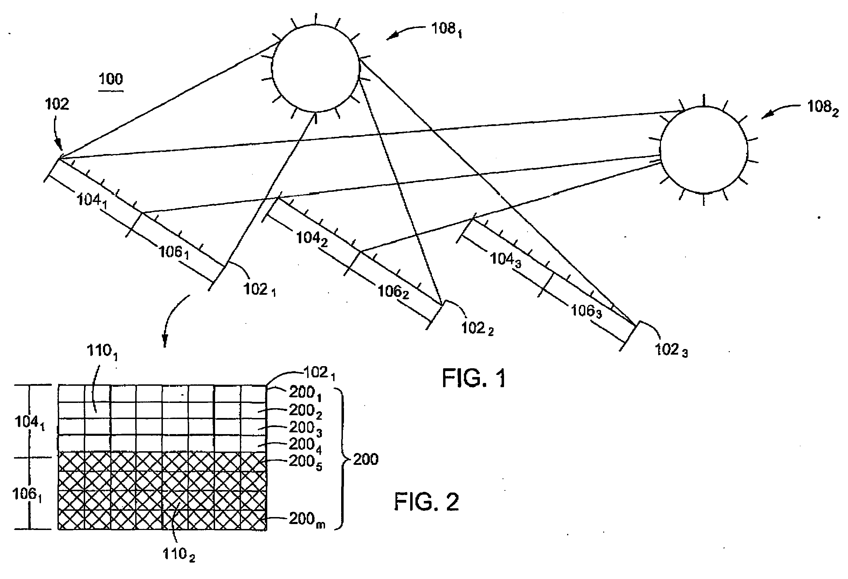

Fig. 1 is a side view of an exemplary embodiment of the photovoltaic panel system 100 that utilizes embodiments of the present invention. The photovoltaic panel system 100 includes a plurality of photovoltaic panels 102 (also referred to as solar cell arrays) and a sun 108₁ and 108₂. In this embodiment, the photovoltaic panels 102 include three panels 102₁, 102₂ and 102₃ that are densely arranged, i.e., the panels shadow one another. Although three panels are shown, the photovoltaic panel system 100 may include any number of panels 102.

In this dense arrangement of panels, the sun 108 illuminates the photovoltaic panels 102₁, 102₂ and 102₃ such that, when the sun 108₁ has a high elevation above the horizon, each panel 102₁, 102₂ and 102₃ is fully illuminated. However, with a lower elevation of the sun 108₂ with respect to the panels 102, each panel 102 comprises lit-areas 104₁, 104₂ and 104₃ and shaded-areas 106, and 106₂. The lit-areas 104₁, 104₂ and 104₃ are areas that are illuminated with more light (direct sun) and thus optimally produce DC. Therefore, in the depicted arrangement, photovoltaic panel 102₃ is operating most efficiently of all the panels. The shaded-areas 106, and 106₂ are subjected to a shadow from a neighboring panel and are exposed to less light; thus, the shaded areas 106₁ and 106₂ may produce less DC than the areas exposed to direct sun. However, utilizing one embodiment of the invention as described below, a maximum amount of power can be extracted from the panel when fully illuminated or when shaded.

Fig. 2 is a front view of an exemplary embodiment of a photovoltaic panel 102₁ of the photovoltaic panel system of Fig. 1. The panel 102₁ comprises rows 200 (rows 200₁ through 200_{M}, where M is an integer). The photovoltaic panel 102, has solar cells 110, in rows 200₁₋₄ that constitute the lit-area 104₁ and solar cells 110₂ in rows 200_{S-M} that constitute the shaded-area 106₁. Therefore, the cells in the lit-area 104, have a different MPP as compared to the MPP of the cells in the shaded-area 106₁.

To further maximize power from a given panel, the solar cells within a panel (or rows thereof) may be tested for efficiency. The cells (or rows thereof) having the highest efficiency are positioned in a location on the panel that receives full illumination for the greatest amount of time, while the cells (or rows thereof) having comparatively lower efficiency at full illumination are positioned lower on a panel when substantially more shade it produced. In thins manner, the panel is designed to maximize the amount of power generated by the cells that are most efficient.

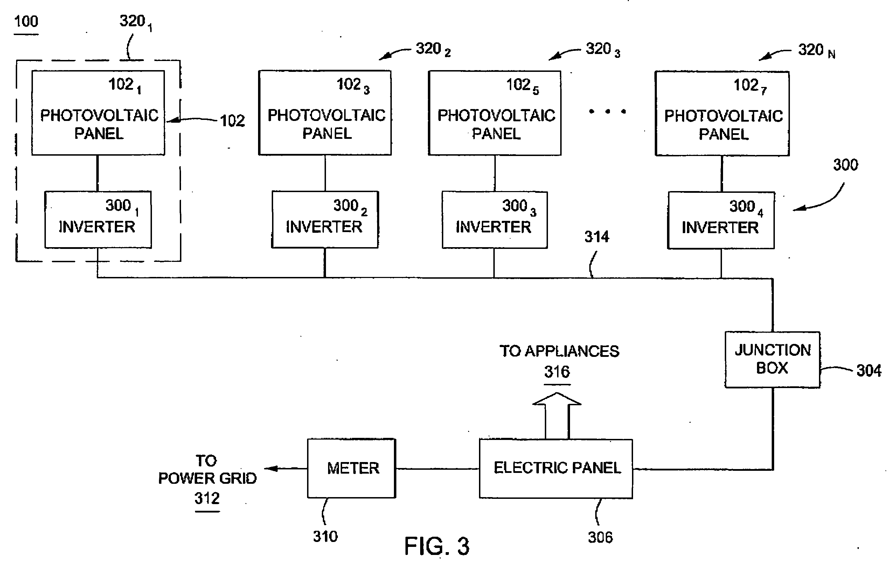

Fig. 3 is a block diagram of an exemplary embodiment of a photovoltaic panel system 100 in accordance with the present invention. This diagram only portrays one variation of the myriad of possible system configurations. The present invention can function in a variety of environments and systems.

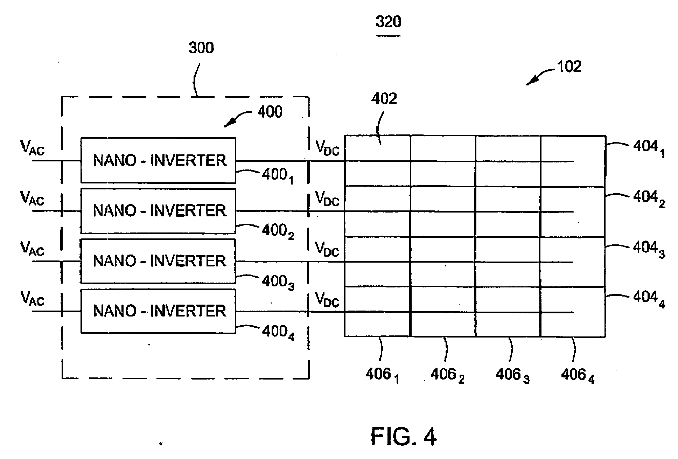

The power generation system 100 comprises a plurality of power generators 320₁, 320₂...320_{N} (where N is an integer), a junction box 304, an electric panel 306 and an electric meter 310. Each power generator (for example generator 320₁) comprises a plurality of inverters 300₁(see Fig. 4) and a photovoltaic panel 102_{1.} As such, inverters 300₁ through 300ₙ are respectively coupled to panels 102₁ through 102ₙ.

The system 100 supplies power to a power grid 312, appliances 316, or both. The photovoltaic panels 102₁, 102₂ ... 102ₙ are well known in the art and are used for generating DC power from solar energy. The plurality of photovoltaic panels 102₁, 102₂ ... 102ₙ (also referred to herein as solar panels or solar arrays) may be of any size or shape. Even though the system 100 shows four (4) photovoltaic panels 102₁, 102₂ ... 102ₙ, the system 100 may include any number of the photovoltaic panels 102.

The inverter 300₁, 300₂ ... 300ₙ converts DC power generated by the plurality of photovoltaic panels 102₁, 102₂ ... 102ₙ into AC power. The inverters 300 of the present invention may produce current that is in-phase with the AC grid current and generate such current with low distortion.

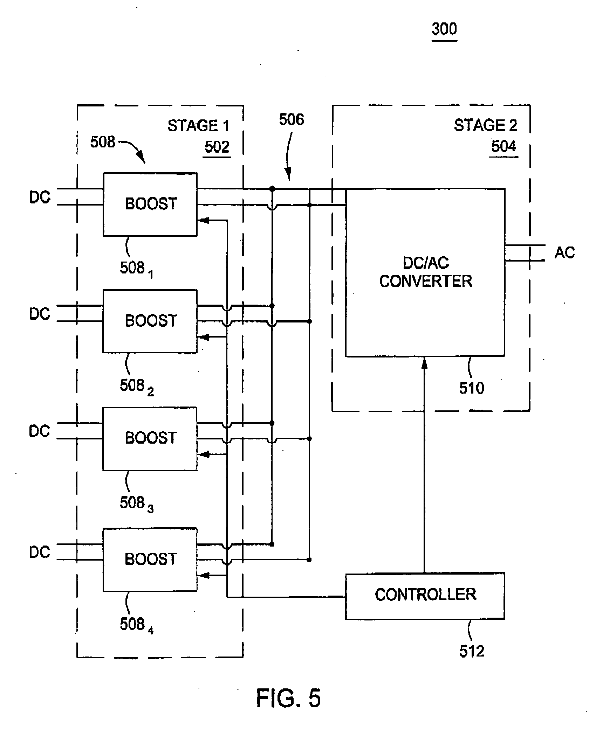

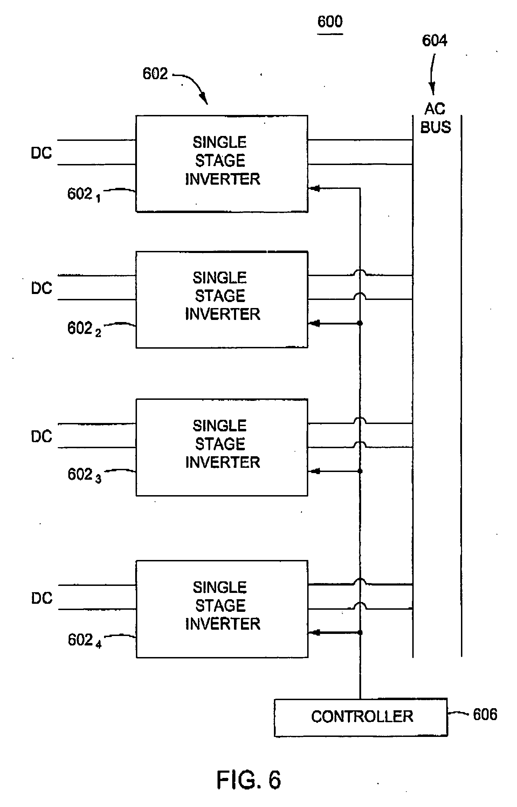

The inverters 300₁, 300₂ ... 300ₙ couple the output AC to an AC bus 314. The AC bus 314 is terminated into a junction box 304. Using such an AC bus 314 and discrete power generators 320_{N}, the system 100 is scalable and flexible to fit any user's needs. The structure of the inverters 300₁, 300₂ ... 300ₙ are discussed below (See Fig. 5 and Fig. 6).

The junction box 304 generally connects together the outputs from all the inverters 300₁, 300₂ ... 300ₙ to form a single AC feed to the electric panel 106.

The electric panel 306 connects the power from the junction box 304 to the power grid 312 and, in some applications, to appliances 316 within a user's facility. For example, in a home, the electric panel 306 is a well-known AC distribution hub comprising various circuit breakers and/or fuses to distribute electricity to various circuits within the home. The electric panel 306 is coupled through the electric meter 310 to the power grid 312. The meter 310 determines the amount of power supplied to the grid 312, such that the owner of the system 100 can be compensated for supplying electricity to the grid 312.

Fig. 4 is a detailed block diagram of an exemplary embodiment of an power generator 320_{N} in accordance with the present invention. This diagram only portrays one variation of the myriad of possible configurations for a power generator.

The power generator 320 includes a photovoltaic panel 102 and a plurality of inverters 300. The photovoltaic panel 102 includes solar cells 402. The solar cells 402 are generally arranged in rows 404 and columns 406, which may include any number of solar cells 402. By way of example, the rows 404 include rows 404₁, 404₂, 404₃ and 404₄ and the columns 406 include columns 406₁, 406₂, 406₃ and 406₄. For simplicity, a four by four cell array is depicted. Those skilled in the art will understand that any number of rows and columns may be used.

The inverters 300 are adapted to couple the rows 404 and/or the solar columns 406. Each inverter 300 comprises a plurality of inverters 400₁, 400₂, 400₃ and 400₄ (referred to herein as nano-inverters). Although four nano-inverters are shown, the system 100 may include any number of inverters 300 and/or nano-inverters 400.

In this embodiment, the nano-inverters 400₁, 400₂, 400, and 400₄, are coupled to the rows 404₁, 404₂, 404₃ and 404₄ of solar cells, respectively. Each of the nano-inverters 400₁, 400₂, 400₃ and 400₄ receive DC from a respective row 404₁, 404₂, 404₃ and/or 404₄. The cells within a row are connected on series. The nano-inverters 400₁, 400₂, 400₃ and 400₄ convert the DC to AC from, for example, each of rows 404₁, 404₂, 404, and 404₄, respectively. Thus, each of the row 404₁, 404₂, 404₃ and 404₄, may be treated as a separate entity, i.e. independently analyzed, controlled and/or configured for optimizing the efficiency and DC production of the row 404. For example, each inverter is controlled to bias the inverter's associated row of cells at the Maximum Power Point (MPP) for the row. In this manner, as the MPP varies for rows that are shadowed, the optimal bias may be applied to rows in full sun and rows in shade. Consequently, by operating each row at the row's MPP, the output of the entire panel is optimized. As such, in this embodiment, the panels may be installed much closer to each other, thereby, maximizing total power output for a given area of installation for the system.

Fig. 5 is a block diagram of an exemplary embodiment of a dual stage inverter 500 that may be used as an inverter 300 within a power generator 320 in accordance with the present invention.

The dual stage inverter 500 includes a first stage 502 and a second stage 504. The first stage 502 comprises a plurality of boost circuits 508, which include 508₁, 508₂...508ₙ. The second stage 504 comprises a DC/AC converter 510. The nature and design of the boost circuits 508 and the DC/AC converter 510 are well known in the art, wherein the boost circuit performs DC to DC conversion and the DC/AC converter performs DC to AC conversion, such as, a pulse width modulator (PWM). A controller 512 provides an individual control signal to each boost circuit 508 to ensure that the rows of cells coupled thereto operates at the row's MPP. The boost circuits 508 are coupled by a DC bus 506, which may be a high voltage bus. The bus 506 couples the combined DC outputs of the boost circuits, 508 to the DC/AC converter 510. The controllers 512 controls DC/AC converter switching to convert DC to AC.

In this embodiment, the boost circuits 508₁, 508₂...508ₙ share a single DC/AC converter 510. Specifically, the nano-inverter 400, includes boost circuit 508₁ and the DC/AC converter 510, the nano-inverter 400₂ includes boost circuit 508₂ and the DC/AC converter 510, and the nano-inverter 400, includes boost circuit 508, and the DC/AC converter 510, and so on. In other embodiments, a shared DC/AC converter may not be used and each inverter may have a separate boost and DC/AC converter circuit. The boost circuit 508 receives DC from a DC source, such as, rows 404, columns 406, solar cell 402, portions thereof and the like. The boost circuits 508 input DC into the DC/AC converter 510 via the bus 512. The DC/AC converter converts the DC to AC.

Fig. 6 is a block diagram of an exemplary embodiment of a single stage inverter 600 that may be used as an inverter 300 within a power generator 320 in accordance with the present invention.

The single stage inverter 600 includes a plurality of single stage nano-inverters 602 and a bus 604. The DC may be generated by a DC source, such as rows 404, columns 406, solar cell 402, portions thereof and the like. The DC from each area, e.g., a row of cells, is coupled to an individual single stage nano-inverter 602. The plurality of single stage nano-inverters 602 comprises single stage nano-inverter 602₁, 602₂, 602₃ and 602₄. Each nano-inverter 602 converts DC to AC and couples the AC to an AC bus 604, where the AC is combined to produce the output of the power generator. The bus 512 is shared by the plurality of single stage nano-inverters 602. The structure of the nano-inverter is substantially the same as a conventional single stage inverter. A controller 606 provides signals to maintain the areas coupled to the inverter operating at the MPP for the area, e.g., row.

While various embodiments have been described above, it should be understood that they have been presented by way of example only, and not limitation. Thus, the breadth and scope of a preferred embodiment should not be limited by any of the above-described exemplary embodiments, but should be defined only in accordance with the following claims and their equivalents.

## Claims

1. An apparatus for converting direct current (DC) to alternating current (AC), comprising:
a plurality of inverters, each Inverter having a separate DC input adapted to be coupled to at least one solar cell defining an area of a solar panel.

2. The apparatus of claim 1, wherein each inverter of the plurality of inverters comprises a plurality of boost circuits, where each boost circuit is adapted to optimize the maximum power point of an area of the solar panel.

3. The apparatus of claim 2, wherein a DC bus couples to an output DC of the plurality of boost circuits.

4. The apparatus of claim 3, wherein each inverter of the plurality of inverters comprises a DC/AC converter coupled to the plurality of boost circuits, wherein the DC/AC converter is shared by the plurality of boost circuits.

5. The apparatus of claim 1, wherein each inverter of the plurality of inverters comprises at least two boost circuits coupled to a DC/AC converter.

6. The apparatus of claim 1, wherein the area is a row of serially coupled solar cells.

7. An apparatus for generating solar power comprising:
at least one photovoltaic panel, wherein the photovoltaic panel comprises a plurality of areas comprising at least one solar cell; and
an inverter coupled to each area in the plurality of areas of the photovoltaic panel.

8. The apparatus of claim 7, wherein the plurality of areas comprising a row of at least one solar cell.

9. The apparatus of claim 7, wherein the inverter comprises a plurality of boost circuits, where each boost circuit is adapted to optimize the maximum power point of an area of the solar panel.

10. The apparatus of claim 9, wherein a DC bus couples to an output DC of the plurality of boost circuits.

11. The apparatus of claim 9, wherein the inverter comprises a DC/AC converter coupled to the plurality of boost circuits, wherein the DC/AC converter is shared by the plurality of boost circuits.

12. The apparatus of claim 9, wherein the inverter comprises at least two boost circuits coupled to a DC/AC converter.

13. The apparatus of claim 7, wherein the area is a row of serially coupled solar cells.

14. The apparatus of claim 7 wherein the at least one photovoltaic panel comprises a plurality of photovoltaic panels, where each panel is positioned such that a first panel shades a second panel and each inverter that is coupled to an area that is shaded is adapted to optimally couple power from the shaded area of at least one solar cell.

15. A method for converting DC to AC, comprising:
receiving DC from at least one solar cell defining each of a plurality of areas of a photovoltaic panel; and
converting the DC from each of the plurality of areas to a single AC output.

16. The method of claim 15, wherein the converting step comprises:
converting DC from each of the plurality of areas to support DC outputs;
combining the separate DC outputs to form a single DC output; and
converting the single DC output into the single AC output.

17. The method of claim 15, wherein the converting step comprises:
converting DC from each of the plurality of areas to separate AC outputs; and
combining the separate AC outputs to form a single AC output.
